(19) **Europäisches Patentamt**
**European Patent Office**
**Office européen des brevets**

(11) **EP 1 890 129 B1**

(12) **FASCICULE DE BREVET EUROPEEN**

(45) Date de publication et mention
de la délivrance du brevet:
**29.04.2009 Bulletin 2009/18**

(51) Int Cl.:
***G01N 21/27*** *(2006.01)*

(21) Numéro de dépôt: **07114075.0**

(22) Date de dépôt: **09.08.2007**

(54) **Procédé d'amélioration d'un filtre coloré**

Verfahren zur Verbesserung eines Farbfilters

Method of improving a colour filter

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **16.08.2006 FR 0607324**

(43) Date de publication de la demande:
**20.02.2008 Bulletin 2008/08**

(73) Titulaires:
• **ESSILOR INTERNATIONAL (COMPAGNIE GENERALE D'OPTIQUE) 94220 Charenton-le-Pont (FR)**
• **CENTRE NATIONAL DE LA RECHERCHE SCIENTIFIQUE (CNRS) 75794 Paris Cedex 16 (FR)**

(72) Inventeurs:
• **Baillet, Gilles 94220 Charenton-le-Pont (FR)**
• **Bourdoncle, Bernard 94220 Charenton-le-Pont (FR)**
• **Harrar, Margalith 94220 Charenton-le-Pont (FR)**
• **Vienot, Françoise 75005 Paris (FR)**

(74) Mandataire: **Cabinet Plasseraud 52, rue de la Victoire 75440 Paris Cedex 09 (FR)**

(56) Documents cités:
**EP-A2- 1 273 894          JP-A- 2001 297 323**

**EP 1 890 129 B1**

**Description**

La présente invention concerne un procédé d'amélioration d'un filtre coloré. Elle peut être appliquée, en particulier, pour améliorer un verre ophtalmique teinté.

Des filtres colorés sont utilisés dans de nombreuses applications, par exemple pour atténuer une intensité lumineuse trop importante ou pour augmenter un contraste d'image. En particulier, des verres ophtalmiques teintés, notamment des verres de protection solaire, sont des filtres colorés qui sont destinés à être assemblés dans une monture de lunettes.

Théoriquement, un filtre peut présenter un spectre de transmission sensiblement plat dans l'intervalle de lumière visible 380 nm - 780 nm (nanomètre). Mais un tel filtre à spectre plat n'est pas réalisable dans la pratique, notamment à cause de limitations spectrales des colorants qui sont utilisés pour fabriquer des filtres. De plus, l'apparence grise d'un filtre à spectre plat serait peu esthétique et peu appréciée pour les applications ophtalmiques. Le spectre d'un filtre réel présente donc des variations dans l'intervalle de lumière visible. Le filtre est alors susceptible de modifier la perception des teintes par un observateur, entre une observation directe d'échantillons de ces teintes et une observation de ceux-ci à travers le filtre. Pour cette raison, un filtre réel est appelé filtre coloré.

L'amélioration d'un filtre coloré est une tâche en générale longue et difficile. En effet, non seulement la teinte du filtre doit être ajustée en fonction de critères esthétiques ou marketing, mais le filtre ne doit pas altérer d'une façon trop importante les teintes d'objets qui sont observés à travers celui-ci. Autrement dit, un rendu naturel des teintes par le filtre est recherché. Il est alors nécessaire, pour proposer une amélioration d'un filtre coloré initial, de fabriquer une gamme de filtres colorés qui correspondent à autant de modifications apportées au filtre initial, et de comparer les filtres modifiés entre eux et au filtre initial pour ce qui concerne la restitution des teintes par les filtres. Un tel mode opératoire est long et coûteux, notamment parce qu'un ensemble d'observateurs doivent être sollicités pour comparer les filtres. En outre, les évaluations des filtres qui sont produites par les observateurs sont sujettes à des variations, à cause de leur caractère subjectif. Il est alors nécessaire de répéter les évaluations effectuées par les observateurs, pour calculer ensuite une moyenne des résultats obtenus.

Pour palier ces difficultés, le document EP 1,273,894 propose un procédé d'obtention d'une gamme de filtres colorés, qui est basé sur le calcul d'écarts chromatiques exprimés dans l'espace CIELAB, défini par la Commission Internationale de l'Eclairage. L'intervention d'observateurs n'est alors plus nécessaire pour évaluer visuellement des échantillons de teintes vus à travers chaque filtre. Néanmoins, le procédé qui est décrit dans ce document est basé sur la fabrication initiale de filtres réels de tests, ce qui est long et compexe et limite dans la pratique les évaluations à des filtres facilement réalisables. En outre, les écarts chromatiques calculés rendent mal compte de l'impression, pour un observateur humain, d'un rendu des teintes qui soit naturel.

Un but de la présente invention est de proposer un procédé d'amélioration d'un filtre, qui ne présente pas les inconvénients précédents.

Pour cela, l'invention propose un procédé tel que défini dans la revendication 1.

Un filtre coloré peut alors être fabriqué, qui présente un spectre de transmission sensiblement égal au spectre sélectionné à l'étape /6/.

Un tel procédé d'amélioration d'un filtre coloré est économique et rapide à mettre en oeuvre, notamment parce qu'il ne nécessite pas de recourir à des observateurs. Il ne requiert que des moyens de calculs, et éventuellement des moyens de mesures spectrophotométriques, qui sont simples et couramment disponibles.

En outre, un tel procédé permet de proposer des améliorations du filtre initial qui n'apparaîtraient pas en réalisant des filtres colorés réels, dérivés du filtre initial. En effet, des contraintes de fabrication des filtres, notamment des limitations spectrales des colorants qui sont utilisés pour réaliser les filtres, peuvent empêcher de disposer de filtres qui correspondent à des spectres ayant un intérêt industriel ou commercial. Un procédé selon l'invention, parce qu'il procède par simulation numérique de filtres fictifs, permet d'identifier des possibilités d'amélioration d'un filtre initial qui ne seraient pas accessibles avec des filtres réels de tests.

Un procédé selon l'invention procède par deux sélections successives. La première sélection est basée sur les coordonnées colorimétriques de filtres qui correspondraient aux spectres générés numériquement. Ces coordonnées colorimétriques, qui sont utilisées aux étapes /1/, /3/ et /4/, peuvent être les coordonnées L*, a*, b* de l'espace CIELAB défini par la Commission Internationale de l'Eclairage (CIE).

La seconde sélection est basée sur une évaluation de la restitution d'au moins une teinte par chaque filtre fictif. De cette façon, le filtre amélioré qui est déterminé à l'issue du procédé satisfait à la fois à une exigence de couleur apparente du filtre et à une exigence de restitution de teintes.

Autrement dit, l'invention permet d'identifier un spectre de filtre qui correspond à des valeurs initiales de coordonnées colorimétriques, tout en recherchant une restitution des teintes qui soit améliorée.

L'utilisation de spectres dont certains au moins ont des variations qui sont constituées de sinusoïdes est particulièrement avantageuse. En effet, un grand nombre de tels spectres peuvent être facilement générés numériquement, en variant au moins un paramètre de sinusoïdes choisi parmi une période, une phase d'origine, une amplitude et une constante de base ajoutée aux sinusoïdes. Un spectre qui est généré numériquement à l'étape /2/ peut être constitué d'une unique sinusoïde, éventuellement ajoutée à une constante de base. Alternativement, il peut être constitué d'une combinaison linéaire de plusieurs sinusoïdes, qui peut être aussi ajoutée à une constante de base.

Une caractéristique importante de l'invention est l'utilisation, à l'étape /5/, d'un modèle numérique d'apparence colorée. Un tel modèle permet de prendre en compte des phénomènes physiologiques et subjectifs qui interviennent dans la perception visuelle des teintes par un être humain. Des variations de sensibilité de l'oeil humain en fonction de la teinte elle-même ou d'autres paramètres environnementaux sont ainsi prises en compte, ainsi que des différences d'appréciation des teintes qui peuvent résulter de facteurs psychologiques. L'évaluation quantitative qui est réalisée à l'étape /5/, pour caractériser la restitution de la teinte de l'échantillon par un filtre fictif, correspond par conséquent à une évaluation réelle, telle qu'elle serait effectuée par un observateur humain avec un échantillon réel du filtre.

Selon un mode de mise en oeuvre préféré de l'invention, le modèle numérique d'apparence colorée («color appearance model» en anglais), qui est utilisé à l'étape /5/, peut être le modèle CIECAM02 («Colour Appearance Model for Colour Management Systems») défini en 2002 par la Commission Internationale de l'Eclairage dans les publications ISBN 3 901 906 290 et CIE 159 : 2004. Les inventeurs ont vérifié que les évaluations de filtres colorés qui sont effectuées en utilisant ce modèle correspondent dans une mesure satisfaisante à des évaluations effectuées par un ensemble d'observateurs humains.

L'étape /5/ d'un procédé selon l'invention peut elle-même comprendre les sous-étapes suivantes, qui sont effectuées pour chaque spectre généré numériquement du second ensemble :

/5-1/ obtenir, à partir du spectre généré numériquement et d'un spectre de réflexion de l'échantillon de teinte, des données optiques relatives à une simulation d'une observation de cet échantillon à travers un filtre fictif qui correspond au spectre généré numériquement ;

/5-2/ introduire, dans le modèle numérique d'apparence colorée, les données optiques relatives à la simulation de l'observation de l'échantillon de teinte à travers le filtre fictif correspondant au spectre généré numériquement, de façon à obtenir, pour ledit échantillon, une valeur d'au moins un attribut perceptif visuel ; et

/5-3/ calculer un écart entre la valeur de l'attribut perceptif obtenue pour la simulation de l'observation de l'échantillon de teinte à travers le filtre fictif qui correspond au spectre généré numériquement et une valeur du même attribut perceptif pour une observation du même échantillon sans le filtre.

L'écart qui est calculé à l'étape /5-3/, entre la valeur de l'attribut perceptif qui est obtenue pour l'échantillon de teinte en simulant une observation de celui-ci à travers le filtre fictif et la valeur pour une observation sans le filtre, constitue une évaluation de la restitution de la teinte de l'échantillon par le filtre fictif. Autrement dit, ce résultat de l'évaluation caractérise la capacité du filtre à restituer la teinte de façon naturelle, c'est-à-dire l'impression d'un observateur de percevoir la teinte réelle à travers le filtre.

Les données optiques qui sont obtenues à l'étape /5-1/ peuvent être des composantes trichromatiques relatives à la simulation de l'observation de chaque échantillon de teinte à travers le filtre fictif dont l'évaluation est en cours.

La valeur d'attribut perceptif visuel qui est obtenue à l'étape /5-2/ peut être une valeur d'angle de teinte H qui peut être repérée dans le système NCS («Natural Colour System») connu de l'Homme du métier.

Selon un perfectionnement de l'invention, les étapes /5-1/ à /5-3/ peuvent être répétées pour plusieurs échantillons de teintes, de façon à obtenir des écarts respectifs d'attribut perceptif pour ces échantillons de teintes. Le procédé comprend alors l'étape supplémentaire suivante :

/5-4/ calculer une valeur caractérisant la restitution globale des teintes par le filtre fictif, à partir de l'ensemble des écarts d'attribut perceptif qui sont obtenus respectivement pour les échantillons de teintes utilisés.

L'évaluation de la restitution des teintes par le filtre fictif qui est ainsi obtenue est basée sur plusieurs teintes. Elle permet d'évaluer le filtre d'une façon globale en tenant compte de conditions d'utilisations variées, c'est-à-dire pour une multiplicité de teintes qui seraient perçues à travers le filtre. La valeur qui caractérise la restitution globale des teintes par le filtre peut alors être utilisée pour la sélection de l'étape /6/.

L'invention propose aussi d'utiliser un procédé d'amélioration tel que décrit précédemment pour améliorer un verre ophtalmique teinté. Dans ce cas, le perfectionnement du procédé qui consiste à utiliser plusieurs échantillons de teintes pour réaliser une évaluation de la restitution globale des teintes par des verres ophtalmiques fictifs est particulièrement avantageux. En effet, un verre ophtalmique peut être utilisé par un porteur de celui-ci dans des conditions très variées, qui dépendent de son environnement lumineux ainsi que des objets qu'il observe.

D'autres particularités et avantages de la présente invention apparaîtront dans la description ci-après d'un exemple de mise en oeuvre non limitatif, en référence aux dessins annexés, dans lesquels :

- la figure 1 est un diagramme synoptique des étapes d'un procédé selon l'invention, pour améliorer un filtre coloré initial ;

-   la figure 2 est un diagramme représentant des spectres en transmission de filtres générés numériquement ;

-   la figure 3 est un diagramme synoptique détaillant l'une des étapes de la figure 1 ;

-   les figures 4a et 4b illustrent les conditions d'observation qui sont considérées pour évaluer un filtre ;

-   la figure 5a est une comparaison de trois diagrammes de valeurs d'écart d'attribut perceptif obtenues pour un filtre initial gris et pour une série d'échantillons de teintes de référence, respectivement pour le filtre initial, pour un filtre fictif sélectionné selon l'invention et pour un filtre fabriqué qui correspond au filtre fictif sélectionné ;

-   la figure 5b correspond à la figure 5a pour un filtre initial brun ; et

-   les figures 6a et 6b sont des diagrammes spectraux illustrant les améliorations respectives des filtres gris et bruns considérés pour les figures 5a et 5b.

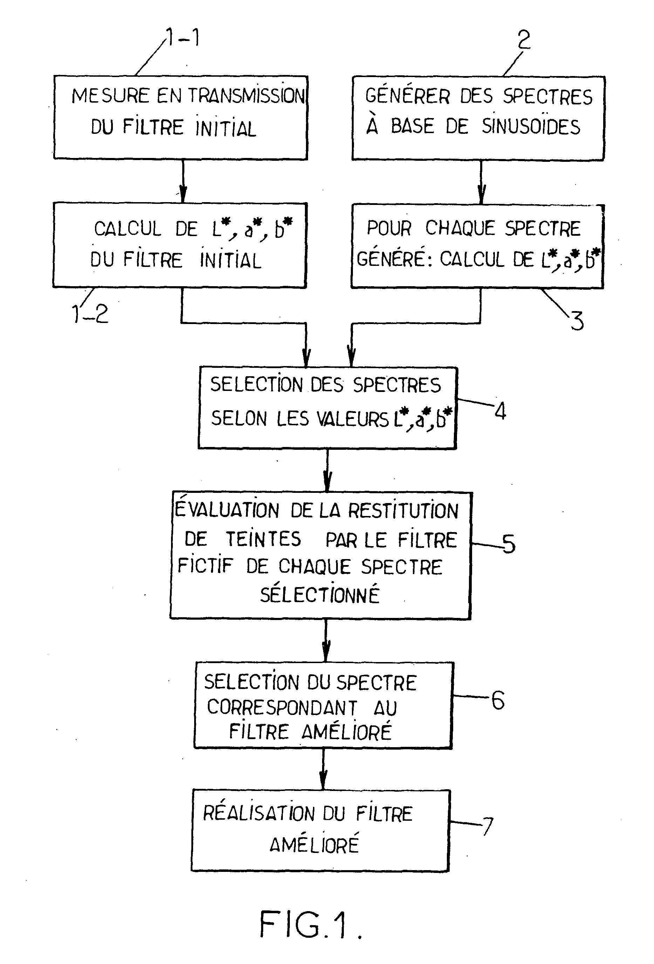

L'amélioration d'un filtre coloré conformément à l'invention est maintenant décrite, en référence à la figure 1.

Lors d'une première étape référencée 1-1, un filtre coloré initial est caractérisé en transmission à l'aide d'un spectrophotomètre, qui peut être d'un type usuel disponible commercialement. Un spectre de transmission du filtre est ainsi obtenu, qui regroupe des valeurs de transmission mesurées pour des longueurs d'onde réparties dans un intervalle de lumière visible. Par exemple, la transmission du filtre peut être mesurée sur l'intervalle de longueur d'onde 400 nm - 700 nm avec un pas de 1 nm.

Des coordonnées colorimétriques du filtre initial sont alors calculées à partir du spectre de transmission mesuré (étape 1-2). Dans le mode de mise en oeuvre de l'invention qui est décrit ici, ces coordonnées sont $L^*$, $a^*$, $b^*$ de l'espace CIELAB. Le mode de calcul de ces coordonnées est supposé connu et n'est pas repris ici. Les coordonnées $L^*$, $a^*$, $b^*$ calculées pour le filtre coloré initial sont destinées à constituer des valeurs cibles pour une première étape de sélection de spectres qui sera exposée plus loin.

Lors de l'étape 2, un premier ensemble de spectres est généré numériquement. Ces spectres, qui caractérisent des filtres colorés fictifs, sont définis sur l'intervalle de longueur d'onde de lumière visible 400 nm - 700 nm, par exemple aussi avec un pas de 1 nm. Les inventeurs ont découvert que ces spectres pouvaient être constitués de fonctions sinusoïdales sur l'intervalle 400 nm - 700 nm, sans qu'une telle restriction ne résulte en une limitation de l'espace des spectres pris en compte qui pourrait empêcher d'identifier des possibilités d'amélioration du filtre initial. Ces spectres peuvent être générés à partir d'une première fonction sinusoïdale en variant des paramètres de celle-ci, tels que sa fréquence, sa phase d'origine, son amplitude ou une constante de base qui est ajoutée à la fonction sinusoïdale. Ces paramètres variables apparaissent plus clairement dans l'expression suivante de la transmission d'un filtre fictif :

$$T(\lambda) = B + A \times \sin (2\pi\alpha \times \lambda + \beta)$$

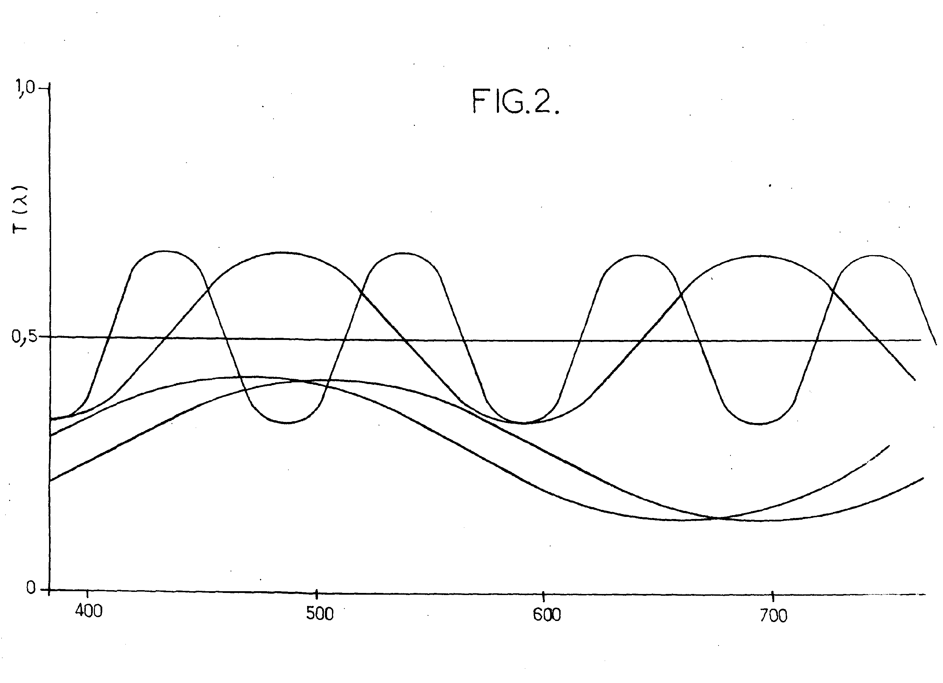

où $\lambda$ désigne une longueur d'onde dans l'intervalle 400 nm - 700 nm, T est la transmission du filtre fictif, A est l'amplitude de la fonction sinusoïdale, B est une constante de base, $\alpha$ et $\beta$ sont respectivement la fréquence et la phase d'origine de la fonction sinusoïdale. Une validation de la limitation de l'espace des spectres générés numériquement à un ensemble de spectres sinusoïdaux résulte de la constatation que les coordonnées colorimétriques d'un spectre quelconque sont le plus souvent assez proches de celles de la composante principale de la décomposition de ce spectre en série de Fourier. La figure 2 est un diagramme spectral qui reproduit les variations de tels spectres générés numériquement. Sur ce diagramme, la période d'oscillation des spectres varie entre la longueur de l'intervalle de lumière visible 400 nm - 700 nm et le quart de cette longueur.

Les spectres générés numériquement peuvent aussi être chacun de la forme d'une moyenne de plusieurs fonctions sinusoïdales du type précédent. La transmission du filtre fictif peut alors être exprimée de la façon suivante :

$$T(\lambda) = B + [\Sigma_{i=1 \text{ à } n} \{A_i \times \sin (2\pi\alpha_i \times \lambda + \beta_i)\}] / n$$

où $A_i$, $\alpha_i$ et $\beta_i$ correspondent aux paramètres précédents A, $\alpha$ et $\beta$ pour chaque fonction sinusoïdale qui est combinée et repérée par l'indice i. n désigne le nombre de fonctions sinusoïdales qui sont combinées dans le spectre. A cause de la multiplication des paramètres qui sont alors nécessaires pour définir chaque spectre, il peut être utile de disposer d'un critère pour limiter initialement le nombre de spectres de cette forme qui sont générés. Un tel critère sera énoncé plus loin, en liaison avec l'élaboration de diagrammes d'écarts d'attribut perceptif calculés pour une série d'échantillons de teintes. L'utilisation de la moyenne des sinusoïdes résulte de la constatation qu'un spectre de transmission d'un filtre peut être recomposé à partir de la combinaison des sinusoïdales de plus grande amplitude obtenue lors de la décomposition des spectres en série de Fourier. Cette recomposition est validée par le fait que le spectre d'origine est recombiné à partir des sinusoïdes restituant les teintes similaires..

Pour chaque spectre qui est généré numériquement, on calcule les coordonnées L*, a*, b* correspondantes (étape 3), et on compare les valeurs obtenues aux valeurs cibles qui ont été calculées pour le filtre coloré initial (étape 4). On sélectionne alors les spectres générés numériquement pour lesquels les valeurs de L*, a*, b* sont proches des valeurs cibles. Différents critères de sélection automatique peuvent être utilisés de façon équivalente, pour discriminer ceux des spectres générés numériquement qui correspondent à des valeurs de L*, a*, b* trop différentes de celles du filtre initial. Ces critères peuvent porter sur un écart quadratique calculé entre les valeurs de L*, a*, b* du spectre généré numériquement et les valeurs cibles, ou sur la plus grande de trois différences absolues entre la valeur d'une coordonnée pour le spectre généré numériquement et la valeur cible correspondante. L'étape 4 constitue une première sélection des spectres générés numériquement, à l'issue de laquelle les spectres sélectionnés présentent tous une couleur proche de celle du filtre initial. Par exemple, cette couleur peut être gris, vert ou brun, notamment lorsque le procédé est appliqué pour améliorer un verre ophtalmique de protection solaire.

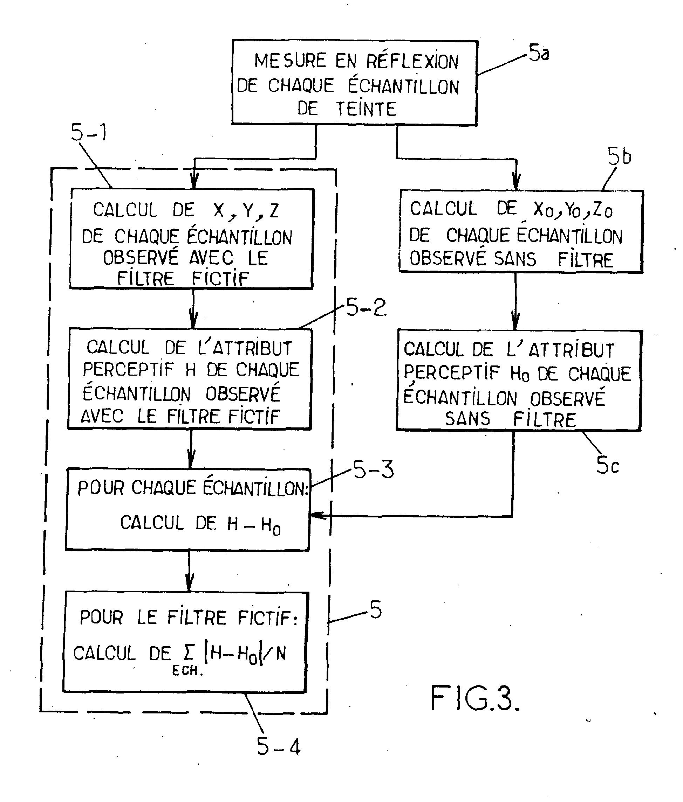

Lors de l'étape 5, on évalue la capacité du filtre fictif qui correspond à chacun des spectres sélectionnés à l'étape 4, à restituer des teintes de référence (figure 3).

Des échantillons de ces teintes sont constitués de supports opaques colorés uniformément sur une face. Des échantillons de teintes normalisés peuvent être utilisés, tels que ceux qui sont fixés par le système NCS («Natural Colour System», voir NCS Atlas 1950 Original). Ceux-ci sont répartis en séries de 40 échantillons, chaque série correspondant à une variation de la teinte («hue» en anglais) des échantillons, et les séries étant différenciées entre elles par des valeurs de saturation («chromativness») et de clarté («brightness» ou encore «1-blacktness»). Les échantillons de teintes d'une même série peuvent être utilisés pour évaluer chaque filtre fictif sélectionné à l'étape 4. En effet, les inventeurs ont montré que des évaluations d'un filtre quelconque qui sont effectuées à partir de séries différentes d'échantillons de teintes NCS aboutissent à des résultats quantitatifs équivalents, alors que ces séries sont différenciées par les valeurs de clarté et de saturation des teintes. Un spectre de réflexion de chacun des échantillons de teintes utilisés est alors obtenu sur l'intervalle de longueur d'onde de lumière visible 400 nm - 700 nm, par exemple par mesure spectrophotométrique (étape 5a de la figure 3). De préférence, le spectre de réflexion de chaque échantillon de teinte est un spectre de réflexion non spéculaire, qui correspond mieux à des conditions réelles d'observation, par rapport à un spectre de réflexion spéculaire. Autrement dit, les spectres de réflexion des échantillons de teintes correspondent à des valeurs d'angles d'incidence et de réflexion de la lumière qui sont différentes de celles définies par les conditions de réflexion de Bragg.

Pour chaque échantillon de teinte et pour chaque spectre sélectionné à l'étape 4, les valeurs spectrales de réflexion de l'échantillon sont combinées avec celles du spectre sélectionné et avec des caractéristiques spectrales d'une source lumineuse d'éclairement (étape 5-1). Des données optiques sont ainsi obtenues, qui caractérisent l'échantillon de teinte lorsqu'il est éclairé par la source lumineuse et observé simultanément à travers le filtre fictif qui correspond au spectre sélectionné. En particulier, les caractéristiques spectrales qui sont utilisées pour la source lumineuse, aussi appelée illuminant, peuvent correspondre aux conditions d'éclairement «SoLux® Daylight», source de lumière telle que décrite dans le brevet US 5,418,419. Dans le mode de mise en oeuvre de l'invention qui est décrit ici, les données optiques qui sont obtenues sont les composantes trichromatiques X, Y, Z relatives à la simulation de l'observation de l'échantillon de teinte à travers le filtre fictif. Les composantes X, Y, Z sont calculées d'une façon qui est connue, en utilisant des moyens de calculs simples tels d'un ordinateur personnel. Il est entendu que dans des modes de mise en oeuvre alternatifs de l'invention, d'autres données optiques peuvent être utilisées d'une façon équivalente.

Lors de l'étape 5-2, les composantes X, Y, Z qui correspondent à la simulation de l'observation de chaque échantillon de teinte à travers chaque filtre fictif sont introduites dans un modèle numérique d'apparence colorée. Les inventeurs ont validé expérimentalement que le modèle numérique CIECAM02 correspond de façon satisfaisante à une perception visuelle humaine moyenne. Pour cette raison, l'utilisation de ce modèle est préférée par les inventeurs. Ce modèle numérique, qui peut être mis en oeuvre sur un ordinateur personnel usuel, produit des valeurs d'attributs perceptifs visuels qui caractérisent la perception de chaque teinte introduite en entrée par ses données optiques. Il prend en compte, lors de la simulation de la perception de chaque teinte, des conditions réelles d'observation. En particulier, il est considéré que l'échantillon de teinte est observé à l'intérieur d'une cabine à lumière aux parois blanches et diffusantes. Dans le mode de mise en oeuvre de l'invention qui est décrit ici, la valeur d'attribut perceptif qui est utilisée est celle de l'angle de teinte H qui peut être repéré dans le système NCS. Elle varie selon un cercle entre 0° et 360°, les valeurs 0°, 90°, 180° et 270° correspondant respectivement aux couleurs rouge, jaune verte et bleue, et la teinte variant continûment entre ces couleurs pour des valeurs intermédiaires de H. L'angle de teinte H est donc particulièrement approprié pour distinguer les échantillons à l'intérieur de la série NCS utilisée.

Parallèlement, des données optiques relatives à chaque échantillon de teinte sont calculées, qui correspondent à cet échantillon lorsqu'il est observé directement, c'est-à-dire en considérant qu'aucun filtre fictif n'est interposé, et en utilisant la même source lumineuse d'éclairement que précédemment. Des composantes trichromatiques $X_0$, $Y_0$, $Z_0$ sont ainsi calculées pour chaque échantillon de teinte utilisé (étape 5b). Elles sont ensuite introduites dans le modèle CIECAM02 pour obtenir une valeur $H_0$ d'angle de teinte qui caractérise la perception visuelle de l'échantillon observé sans filtre (étape 5c). Etant donné que les étapes 5a, 5b et 5c concernent les échantillons de teintes indépendamment du spectre de filtre fictif qui est en cours d'évaluation, elles sont exécutées une seule fois. Les valeurs qui sont obtenues pour les échantillons de teintes observés sans filtre sont ensuite reprises pour évaluer successivement tous les filtres fictifs qui correspondent aux spectres sélectionnés à l'étape 4.

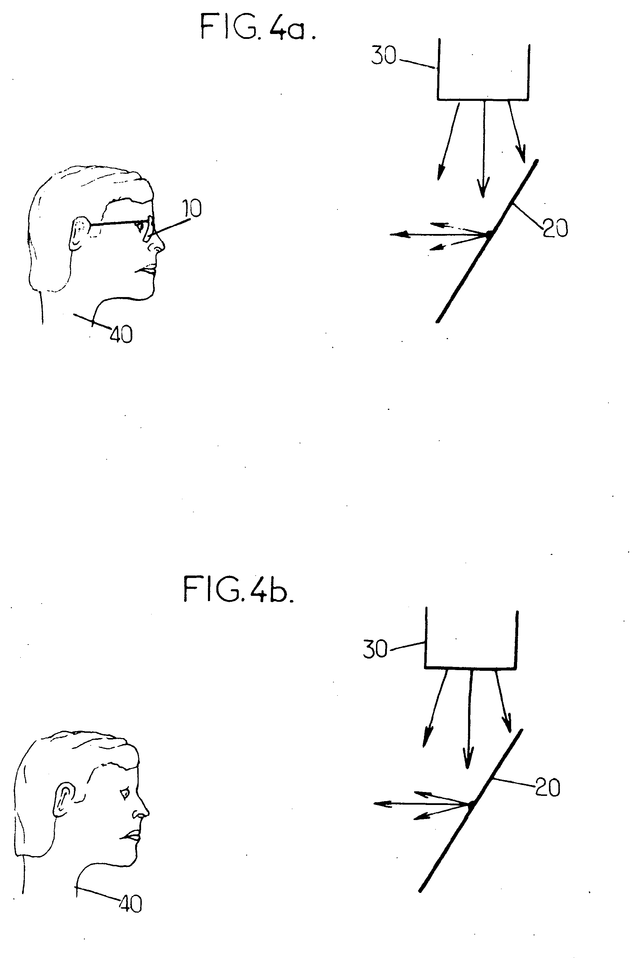

Les figures 4a et 4b illustrent les conditions d'observation qui correspondent respectivement aux valeurs H et $H_0$ pour chaque échantillon de teinte. L'échantillon de teinte 20 est éclairé par la source lumineuse 30, qui possède un spectre d'émission correspondant à l'illuminant utilisé pour le calcul des composantes X, Y, Z. La valeur H, telle qu'elle résulte des étapes 5-1 et 5-2 pour chaque filtre fictif, correspond au cas où l'échantillon 20 est regardé par l'observateur 40 à travers le filtre fictif 10, le filtre 10 étant disposé entre l'échantillon 20 et l'oeil de l'observateur 40. A titre d'illustration, la figure 4a illustre un cas où le filtre 10 est un verre ophtalmique teinté, notamment un verre de lunettes de protection solaire. Mais le filtre 10 peut être aussi, d'une façon équivalente, une visière teintée de casque, un verre de masque de protection, un filtre d'appareil de mesure optique ou de visée, etc. La figure 4b illustre les conditions d'observation qui correspondent à la valeur $H_0$. Elles sont identiques à celles de la figure 4a, en supprimant le filtre 10.

De retour à la figure 3, lors de l'étape 5-3, une différence est calculée pour chaque échantillon de teinte et pour chaque spectre de filtre fictif, entre la valeur d'angle de teinte H qui correspond à cet échantillon lorsqu'il est observé à travers le filtre fictif et la valeur $H_0$ qui correspond au même échantillon observé sans filtre. La valeur absolue de la différence $H-H_0$, notée $|H-H_0|$, constitue une évaluation de la restitution de la teinte de l'échantillon par le filtre. Une faible valeur de $|H-H_0|$, typiquement inférieure à 0,1, indique qu'un filtre coloré correspondant au spectre modifierait peu la perception de la teinte de l'échantillon, et une valeur élevée (supérieure à 0,1 notamment) indique qu'il provoquerait une modification notable.

La restitution globale des teintes par chaque filtre fictif peut être évaluée en calculant une moyenne des valeurs absolues des écarts d'attribut perceptif obtenus respectivement pour les échantillons de teintes et pour ce filtre (étape 5-4). Ainsi, le résultat de l'évaluation du filtre fictif, noté R, est égal à $\Sigma_{\{échantillons\}} |H-H_0|/N$, où N est le nombre d'échantillons de teintes qui ont été utilisés pour évaluer le filtre. Par exemple, N peut être égal à 40 lorsqu'une série complète d'échantillons de teinte NCS a été utilisée. D'autres formules équivalentes peuvent être adoptées alternativement pour le résultat d'évaluation R.

De retour à la figure 1, les spectres de filtres fictifs sélectionnés à l'étape 4 sont classés par ordre croissant des résultats R. Ceux qui apparaissent en premier dans ce classement correspondent à une restitution plus naturelle des teintes, alors que ceux de la fin du classement correspondent à une altération plus importante de la perception des teintes. On sélectionne alors le spectre qui correspond à la valeur de résultat R la plus faible (étape 6). Le filtre fictif qui est associé à ce spectre constitue une amélioration du filtre coloré initial.

Lors de l'étape 7, on peut fabriquer un filtre coloré réel qui correspond au spectre sélectionné à l'étape 6. Le mode de fabrication d'un tel filtre est supposé connu de l'Homme du métier et n'est pas repris ici. En particulier, des colorants sont sélectionnés et mélangés dans des proportions appropriées à un matériau transparent destiné à constituer une matrice du filtre. Ces proportions sont déterminées en fonction du spectre sélectionné et des caractéristiques d'absorption des colorants, pour obtenir un filtre réel dont le spectre est le plus proche possible du spectre sélectionné.

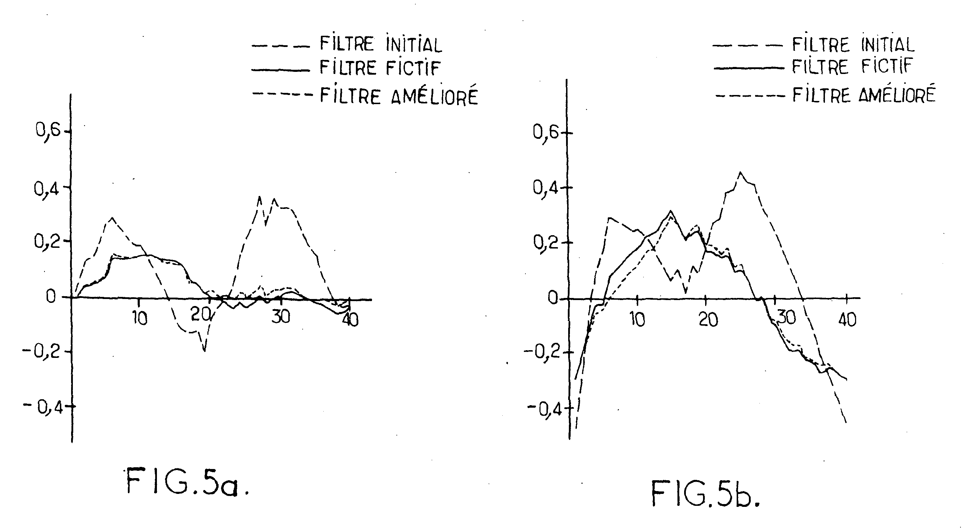

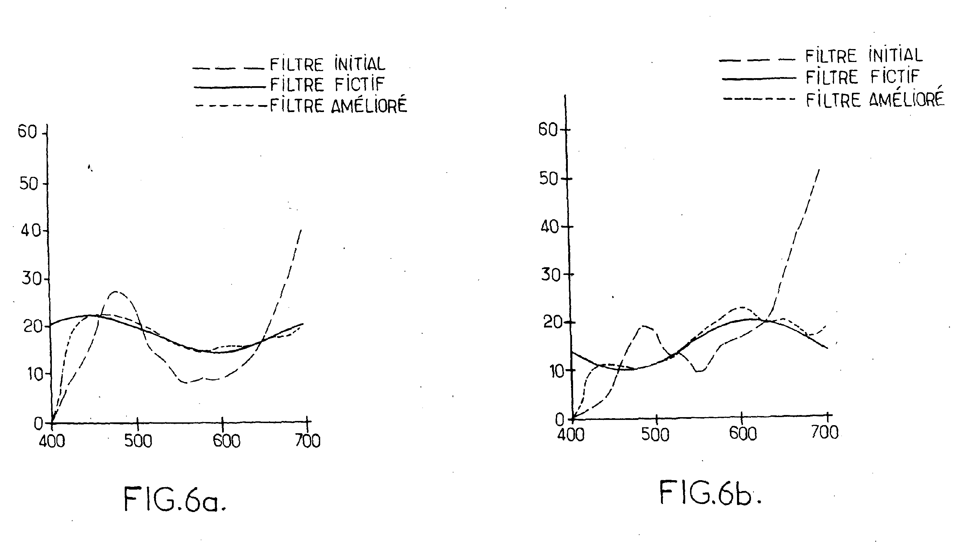

Les figures 5a, 6a et 5b, 6b illustrent des améliorations de filtres qui ont été réalisées selon l'invention, pour des filtres initiaux gris (figures 5a et 6a) et brun (figures 5b et 6b).

La figure 5a est un diagramme qui regroupe, pour le filtre initial gris, pour le filtre fictif du spectre sélectionné à l'étape 6 et pour le filtre amélioré fabriqué à l'étape 7 qui lui correspond, les valeurs de la différence $H-H_0$ obtenues pour les 40 échantillons de teintes de la série NCS utilisée. Les échantillons de teintes sont repérés en abscisse par une numérotation de ceux-ci dans la série NCS, et les valeurs de $H-H_0$ correspondantes sont repérées en ordonnée. Ces valeurs sont obtenues à partir de spectres de transmission mesurés pour le filtre initial et pour le filtre amélioré. Un tel diagramme fournit une représentation de la modification de la perception des teintes qui est causée par chaque filtre. Dans ce diagramme, une courbe proche de l'axe d'abscisse indique que le filtre procure une perception naturelle des teintes, avec une altération très réduite de celles-ci. Des parties de courbe qui ont des valeurs positives d'ordonnée correspondent à des teintes qui sont perçues de façon décalée en tournant dans le sens horaire sur le cercle NCS. A l'inverse, des parties de courbe à valeurs négatives d'ordonnée correspondent à des teintes qui sont perçues de façon décalée en tournant dans le sens trigonométrique sur le cercle NCS. Dans la représentation de la figure 5a, les variations qui correspondent au filtre fictif sélectionné et au filtre amélioré ont des amplitudes plus faibles que celles du filtre initial.

Les valeurs de R calculées pour ce premier exemple sont : 0,16 pour le filtre initial gris, 0,055 pour le filtre fictif sélectionné à l'étape 6 et 0,060 pour le filtre amélioré qui a été fabriqué. Ces deux dernières sont très proches l'une de l'autre, et sont inférieures à la valeur de R pour le filtre initial. Cette comparaison quantifie l'amélioration du filtre initial qui a été obtenue, en termes de restitution de teintes.

La figure 6a reproduit le spectre du filtre initial gris considéré à la figure 5a, sur l'intervalle de longueur d'onde de lumière visible 380 nm - 780 nm, ainsi que le spectre sélectionné à l'étape 6 pour ce filtre initial et le spectre du filtre amélioré fabriqué à l'étape 7. Ces deux derniers présentent des variations qui sont similaires, et qui sont inférieures à celles du spectre du filtre initial.

Les figures 5b et 6b correspondent respectivement aux figures 5a et 6b, pour un filtre initial brun. Les valeurs de R calculées pour ce second exemple sont : 0,23 pour le filtre initial brun, 0,171 pour le filtre fictif sélectionné à l'étape 6 et 0,174 pour le filtre amélioré qui a été fabriqué.

Lorsqu'un procédé d'amélioration d'un filtre coloré tel que décrit précédemment a été mis en oeuvre, à partir de spectres générés numériquement qui correspondent chacun à une sinusoïde unique, il est possible d'améliorer encore le filtre en utilisant des spectres formés chacun d'une combinaison de sinusoïdes. Les inventeurs ont découvert que les diagrammes de restitution des couleurs prédits par le modèle numérique d'apparence colorée, lorsqu'ils sont combinés linéairement (moyenne), donnent les mêmes résultats que si les spectres de transmission correspondants sont combinés et introduits dans le modèle. A partir de cette constatation, on peut examiner les diagrammes du type de ceux des figures 5a et 5b, qui sont obtenus pour les spectres constitués chacun d'une sinusoïde unique. On sélectionne alors certains de ces spectres mono-sinusoïdaux, de sorte que les diagrammes qui leur correspondent respectivement présentent des variations sensiblement analogues ou complémentaires de l'écart d'attribut perceptif H-H$_0$, pour la série d'échantillons de teintes utilisée. On entend par variations analogues ou complémentaires, des valeurs de la différence H-H$_0$ qui sont du même signe ou respectivement positives et négatives pour un même sous-ensemble d'échantillons de teintes, de façon à minimiser au maximum l'écart d'attribut perceptif H-H$_0$ afin de restituer au mieux les couleurs. Il est alors possible de proposer un nouveau spectre de filtre fictif, sous forme d'une combinaison linaire des spectres mono-sinusoïdaux sélectionnés. Les paramètres de cette combinaison sont déduits de l'examen des diagrammes, pour arriver à une compensation d'ordonnée. Une nouvelle amélioration du filtre coloré initial peut alors être obtenue, en répétant le procédé de l'invention à partir d'un premier ensemble de spectres générés numériquement qui sont proches de la combinaison linéaire de sinusoïdes proposée d'après les diagrammes. On entend par «spectres proches de la combinaison linéaire de sinusoïdes proposée d'après les diagrammes», des spectres dont les valeurs paramétriques correspondent à des variations limitées par rapport aux paramètres proposés d'après les diagrammes. Ces combinaisons linéaires de sinusoïdes, résultant de la combinaison linéaire des diagrammes de restitution des couleurs, permettent de minimiser au maximum l'écart d'attribut perceptif H-H$_0$ afin de restituer au mieux les couleurs.

**Revendications**

**1.** Procédé d'amélioration d'un filtre coloré comprenant les étapes suivantes :

/1/ déterminer des coordonnées colorimétriques d'un filtre coloré initial ;
/2/ générer numériquement un premier ensemble de spectres de transmission, chacun des spectres dudit premier ensemble étant une sinusoïde ou une combinaison linéaire de plusieurs sinusoïdes sur un intervalle de lumière visible ;
/3/ pour chaque spectre du premier ensemble, calculer des coordonnées colorimétriques dudit spectre ;
/4/ au sein du premier ensemble de spectres générés, numériquement, sélectionner un second ensemble de spectres ayant des coordonnées colorimétriques qui correspondent sensiblement aux coordonnées du filtre coloré initial ;
/5/ pour chaque spectre du second ensemble, évaluer quantitativement un filtre fictif correspondant audit spectre, un résultat de ladite évaluation caractérisant une capacité dudit filtre fictif à restituer au moins une teinte et étant obtenu en utilisant un modèle numérique d'apparence colorée pour simuler une perception visuelle d'un échantillon de la teinte à travers ledit filtre fictif ; et
/6/ au sein du second ensemble de spectres, sélectionner l'un des spectres qui présente la meilleure évaluation quantitative pour constitue une amélioration du filtre initial.

**2.** Procédé selon la revendication 1, comprenant en outre l'étape suivante :

/7/ fabriquer un filtre coloré amélioré ayant un spectre de transmission sensiblement égal au spectre sélectionné à l'étape /6/.

**3.** Procédé selon la revendication 1 ou 2, suivant lequel le premier ensemble de spectres est généré en variant au moins un paramètre de sinusoïdes choisi dans une liste comprenant une période, une phase d'origine, une amplitude et une constante de base ajoutée auxdites sinusoïdes.

**4.** Procédé selon l'une quelconque des revendications précédentes, suivant lequel les coordonnées colorimétriques utilisées aux étapes /1/, /3/ et /4/ sont les coordonnées L*, a*, b* de l'espace CIELAB.

**5.** Procédé selon l'une quelconque des revendications précédentes, suivant lequel l'étape /5/ comprend les sous-étapes suivantes, effectuées pour chaque spectre généré numériquement du second ensemble :

/5-1/ obtenir, à partir du spectre généré numériquement et d'un spectre de réflexion de l'échantillon de teinte, des données optiques relatives à une simulation d'une observation dudit échantillon à travers un filtre fictif correspondant au spectre généré numériquement ;
/5-2/ introduire, dans le modèle numérique d'apparence colorée, les données optiques relatives à la simulation de l'observation de l'échantillon de teinte à travers le filtre fictif correspondant au spectre généré numériquement, de façon à obtenir, pour ledit échantillon, une valeur d'au moins un attribut perceptif visuel ; et
/5-3/ calculer un écart entre la valeur de l'attribut perceptif obtenue pour la simulation de l'observation de l'échantillon de teinte à travers le filtre fictif correspondant au spectre généré numériquement et une valeur dudit attribut perceptif pour une observation du même échantillon sans le filtre,

ledit écart formant une évaluation de la restitution de la teinte de l'échantillon par le filtre fictif correspondant au spectre généré numériquement.

**6.** Procédé selon la revendication 5, suivant lequel, pour chaque spectre généré numériquement du second ensemble, les étapes /5-1/ à /5-3/ sont répétées pour plusieurs échantillons de teintes de façon à obtenir des écarts respectifs d'attribut perceptif pour lesdits échantillons de teintes, et suivant lequel le procédé comprend en outre l'étape suivante :

/5-4/ calculer une valeur caractérisant la restitution globale des teintes par le filtre fictif correspondant au spectre généré numériquement, à partir de l'ensemble des écarts d'attribut perceptif respectivement obtenus pour les échantillons de teintes utilisés,

ladite valeur caractérisant la restitution globale des teintes étant utilisée pour la sélection de l'étape /6/.

**7.** Procédé selon la revendication 5 ou 6, suivant lequel les données optiques obtenues à l'étape /5-1/ sont des composantes trichromatiques relatives à la simulation de l'observation de l'échantillon de teinte à travers le filtre fictif correspondant au spectre généré numériquement.

**8.** Procédé selon l'une quelconque des revendications 5 à 7, suivant lequel la valeur d'attribut perceptif visuel obtenue à l'étape /5-2/ est une valeur d'angle de teinte H repérée dans le système NCS.

**9.** Procédé selon l'une quelconque des revendications précédentes, suivant lequel le modèle numérique d'apparence colorée utilisé à l'étape /5/ est le modèle CIECAM02.

**10.** Procédé selon l'une quelconque des revendications 1 à 9, suivant lequel certains au moins des spectres générés numériquement du premier ensemble sont chacun constitués d'une unique sinusoïde, éventuellement ajoutée à une constante de base.

**11.** Procédé selon l'une quelconque des revendications 1 à 9, suivant lequel certains au moins des spectres générés numériquement du premier ensemble sont chacun constitués d'une combinaison linéaire de plusieurs sinusoïdes, éventuellement ajoutée à une constante de base.

**12.** Procédé selon la revendication 11, suivant lequel les sinusoïdes combinées entre elles pour constituer l'un au moins des spectres du premier ensemble sont sélectionnées préalablement de sorte que des filtres fictifs ayant respectivement lesdites sinusoïdes comme spectres présentent des variations sensiblement analogues ou complémentaires d'un écart d'attribut perceptif pour plusieurs échantillons de teintes, ledit écart étant calculé pour chaque filtre fictif et pour chaque échantillon de teinte entre une valeur de l'attribut perceptif obtenue pour une simulation d'observation dudit échantillon de teinte à travers le filtre fictif et une valeur dudit attribut obtenue pour une simulation d'observation du même échantillon sans filtre.

13. Utilisation d'un procédé d'amélioration selon l'une quelconque des revendications précédentes, pour améliorer un verre ophtalmique teinté.

**Claims**

1. Method of improving a colour filter comprising the following steps:

    /1/ determining colorimetric coordinates of an initial colour filter;
    /2/ numerically generating a first set of transmission spectra, each of the spectra of said first set being a sinusoid or a linear combination of several sinusoids over a visible light interval;
    /3/ for each spectrum of the first set, calculating colorimetric coordinates of said spectrum;
    /4/ within the first set of numerically generated spectra, selecting a second set of spectra having colorimetric coordinates which correspond substantially to the coordinates of the initial colour filter;
    /5/ for each spectrum of the second set, quantitatively evaluating a dummy filter corresponding to said spectrum, a result of said evaluation characterizing a capacity of said dummy filter to restore at least one hue and being obtained by using a numerical model of colour appearance to simulate a visual perception of a sample of the hue through said dummy filter; and
    /6/ within the second set of spectra, selecting one of the spectra which exhibits the best quantitative evaluation to constitute an improvement of the initial filter.

2. Method according to Claim 1, furthermore comprising the following step:

    /7/ manufacturing an improved colour filter having a transmission spectrum substantially equal to the spectrum selected in step /6/.

3. Method according to Claim 1 or 2, wherein the first set of spectra is generated by varying at least one sinusoid parameter chosen from a list comprising a period, an initial phase, an amplitude and a base constant added to said sinusoids.

4. Method according to any one of the preceding claims, wherein the colorimetric coordinates used in steps /1/, /3/ and /4/ are the coordinates $L^*$, $a^*$, $b^*$ of the CIELAB space.

5. Method according to any one of the preceding claims, wherein step /5/ comprises the following substeps, performed for each numerically generated spectrum of the second set:

    /5-1/ obtaining, on the basis of the numerically generated spectrum and of a reflection spectrum of the hue sample, optical data relating to a simulation of an observation of said sample through a dummy filter corresponding to the numerically generated spectrum;
    /5-2/ introducing, into the numerical model of colour appearance, the optical data relating to the simulation of the observation of the hue sample through the dummy filter corresponding to the numerically generated spectrum, so as to obtain, for said sample, a value of at least one visual perceptive attribute; and
    /5-3/ calculating a deviation between the perceptive attribute value obtained for the simulation of the observation of the hue sample through the dummy filter corresponding to the numerically generated spectrum and a value of said perceptive attribute for an observation of the same sample without the filter,

    said deviation forming an evaluation of the restitution of the hue of the sample by the dummy filter corresponding to the numerically generated spectrum.

6. Method according to Claim 5, wherein, for each numerically generated spectrum of the second set, steps /5-1/ to /5-3/ are repeated for several samples of hues so as to obtain respective deviations of perceptive attribute for said samples of hues, and wherein the method furthermore comprises the following step:

    /5-4/ calculating a value characterizing the global restitution of the hues by the dummy filter corresponding to the numerically generated spectrum, on the basis of the set of deviations of perceptive attribute obtained respectively for the samples of hues used,

    said value characterizing the global restitution of the hues being used for the selection of step /6/.

7. Method according to Claim 5 or 6, wherein the optical data obtained in step /5-1/ are trichromatic components relating to the simulation of the observation of the hue sample through the dummy filter corresponding to the numerically generated spectrum.

8. Method according to any one of Claims 5 to 7, wherein the visual perceptive attribute value obtained in step /5-2/ is a value of hue angle H read off from the NCS system.

9. Method according to any one of the preceding claims, wherein the numerical model of colour appearance used in step /5/ is the CIECAM02 model.

10. Method according to any one of Claims 1 to 9, wherein certain at least of the numerically generated spectra of the first set each consist of a single sinusoid, possibly added to a base constant.

11. Method according to any one of Claims 1 to 9, wherein certain at least of the numerically generated spectra of the first set each consist of a linear combination of several sinusoids, possibly added to a base constant.

12. Method according to Claim 11, wherein the sinusoids combined together to constitute one at least of the spectra of the first set are selected beforehand so that dummy filters having respectively said sinusoids as spectra exhibit substantially analogous or complementary variations of a perceptive attribute deviation for several samples of hues, said deviation being calculated for each dummy filter and for each sample of hue between a perceptive attribute value obtained for a simulation of observation of said hue sample through the dummy filter and a value of said attribute obtained for a simulation of observation of the same sample with no filter.

13. Use of an improving method according to any one of the preceding claims, to improve a tinted ophthalmic lens.

**Patentansprüche**

1. Verfahren zum Verbessern eines Farbfilters, welches die folgenden Schritte umfasst, gemäß welchen:

/1/ die kolorimetrischen Koordinaten eines Ausgangsfarbfilters bestimmt werden;
/2/ eine erste Gruppe von Transmissionsspektren numerisch generiert werden, wobei jedes der Spektren der ersten Gruppe eine Sinuskurve oder eine Linearkombination von mehreren Sinuskurven auf einem Intervall von sichtbarem Licht ist;
/3/ für jedes Spektrum der ersten Gruppe die kolorimetrischen Koordinaten des Spektrums berechnet werden;
/4/ aus der ersten von numerisch generierten Gruppe von Spektren eine zweite Gruppe von Spektren gewählt wird, die kolorimetrische Koordinaten aufweisen, die den Koordinaten des Ausgangsfarbfilters im Wesentlichen entsprechen;
/5/ für jedes Spektrum der zweiten Gruppe ein dem Spektrum entsprechender, fiktiver Filter quantitativ bewertet wird, wobei ein Ergebnis der Bewertung eine Fähigkeit des fiktiven Filters **gekennzeichnet**, wenigstens einen Farbton zu bilden, und wobei dieses dadurch erhalten wird, dass ein numerisches Farberscheinungsmodell verwendet wird, um eine visuelle Wahrnehmung eines Farbtonmusters über den fiktiven Filter zu simulieren; und
/6/ aus der zweiten Gruppe von Spektren eines der Spektren gewählt wird, welches die beste quantitative Bewertung aufweist, um eine Verbesserung des Ausgangsfilters zu bewerkstelligen.

2. Verfahren gemäß Anspruch 1, welches ferner den folgenden Schritt einschließt:

/7/ Herstellen eines verbesserten Farbfilters, der ein Transmissionsspektrum aufweist, das dem in Schritt /6/ gewählten Spektrum im Wesentlichen gleich ist.

3. Verfahren gemäß Anspruch 1 oder 2, bei welchem die erste Gruppe von Spektren dadurch generiert wird, dass wenigstens ein Sinuskurvenparameter variiert wird, der aus einer Liste ausgewählt wird, die eine Periode, eine Anfangsphase, eine Amplitude und eine den Sinuskurven hinzugefügte Basiskonstante einschließt.

4. Verfahren gemäß einem der vorstehenden Ansprüche, bei welchem die in den Schritten /1/, /3/ und /4/ verwendeten, kolorimetrischen Koordinaten die Koordinaten L*, a*, b* des Farbraums CIELAB sind.

5. Verfahren gemäß einem der vorstehenden Ansprüche, bei welchem der Schritt /5/ folgende, für jedes numerisch generierte Spektrum der zweiten Gruppe durchgeführten Unterschritte einschließt, gemäß welchen:

/5-1/ aus dem numerisch generierten Spektrum und aus einem Reflexionsspektrum des Farbtonmusters optische Daten erhalten werden, die sich auf eine Simulation einer Beobachtung des Musters über einen, dem numerisch generierten Spektrum entsprechenden, fiktiven Filter beziehen;

/5-2/ in das numerische Farberscheinungsmodell die optischen Daten, die sich auf die Simulation der Beobachtung des Farbtonmusters über den, dem numerisch generierten Spektrum entsprechenden, fiktiven Filter beziehen, eingeführt werden, um für das Muster einen Wert wenigstens einer Eigenschaft der visuellen Wahrnehmung zu erhalten; und

/5-3/ eine Abweichung berechnet wird, und zwar zwischen dem Wert der Eigenschaft der Wahrnehmung, der für die Simulation der Beobachtung des Farbtonmusters über den, dem numerisch generierten Spektrum entsprechenden, fiktiven Filter erhalten worden ist, und einem Wert der Eigenschaft der Wahrnehmung für eine Beobachtung des gleichen Musters ohne Filter,

wobei die Abweichung eine Bewertung der Wiedergabe des Farbtons des Musters mittels des, dem numerisch generierten Spektrum entsprechenden, fiktiven Filters bildet.

6. Verfahren gemäß Anspruch 5, bei welchem für jedes numerisch generierte Spektrum aus der zweiten Gruppe die Schritte /5-1/ bis /5-3/ für mehrere Farbtonmuster wiederholt werden, um jeweilige Abweichungen der Eigenschaft der Wahrnehmung für die Farbtonmuster zu erhalten, und wobei das Verfahren ferner den folgenden Schritt einschließt:

/5-4/ Berechnen eines Werts, der die gesamte Wiedergabe der Farbtöne mittels des, dem numerisch generierten Spektrum entsprechenden, fiktiven Filters kennzeichnet, und zwar aus der Gruppe der Abweichungen der Eigenschaft der Wahrnehmung, die für die verwendeten Farbtonmuster erhalten worden sind,

wobei der Wert, der die gesamte Wiedergabe der Farbtöne kennzeichnet, für die Wahl in Schritt /6/ verwendet wird.

7. Verfahren gemäß Anspruch 5 oder 6, bei welchem die in Schritt /5-1/ erhaltenen, optischen Daten trichromatische Komponenten sind, die sich auf die Simulation der Beobachtung des Farbtonmusters über den, dem numerisch generierten Spektrum entsprechenden, fiktiven Filter beziehen.

8. Verfahren gemäß einem der Ansprüche 5 bis 7, bei welchem der in Schritt /5-2/ erhaltene Wert der Eigenschaft der visuellen Wahrnehmung ein im System NCS gefundener Winkelwert des Farbtons H ist.

9. Verfahren gemäß einem der vorstehenden Ansprüche, bei welchem das in Schritt /5/ verwendete, numerische Farberscheinungsmodell das Modell CIECAM02 ist.

10. Verfahren gemäß einem der Ansprüche 1 bis 9, bei welchem wenigstens einige der numerisch generierten Spektren aus der ersten Gruppe jeweils aus einer einzigen, eventuell zu einer Basiskonstanten hinzugefügten Sinuskurve gebildet ist.

11. Verfahren gemäß einem der Ansprüche 1 bis 9, bei welchem wenigstens einige der numerisch generierten Spektren aus der ersten Gruppe jeweils aus einer eventuell zu einer Basiskonstanten hinzugefügten Linearkombination von mehreren Sinuskurven gebildet ist.

12. Verfahren gemäß Anspruch 11, bei welchem die zum Bilden des wenigstens einen der Spektren der ersten Gruppe miteinander kombinierten Sinuskurven vorab derart gewählt worden sind, dass die fiktiven Filter, die als Spektren jeweils die Sinuskurven aufweisen, Variationen aufweisen, die bezüglich einer Abweichung einer Eigenschaft der Wahrnehmung für mehrere Farbtonmuster im Wesentlichen analog oder komplementär sind, wobei die Abweichung für jeden fiktiven Filter und für jedes Farbtonmuster berechnet wird, und zwar zwischen dem Wert der Eigenschaft der Wahrnehmung, der für die Simulation der Beobachtung des Farbtonmusters über den, dem numerisch generierten Spektrum entsprechenden, fiktiven Filter erhalten worden ist, und einem Wert der Eigenschaft der Wahrnehmung für eine Beobachtung des gleichen Musters ohne Filter.

13. Verwendung eines Verbesserungsverfahrens gemäß einem der vorstehenden Ansprüche zum Verbessern eines getönten, ophtalmischen Glases.

MESURE EN TRANSMISSION
DU FILTRE INITIAL

1-1

GÉNÉRER DES SPECTRES
À BASE DE SINUSOÏDES

2

CALCUL DE $L^*, a^*, b^*$
DU FILTRE INITIAL

1-2

POUR CHAQUE SPECTRE
GÉNÉRÉ: CALCUL DE $L^*, a^*, b^*$

3

SELECTION DES SPECTRES
SELON LES VALEURS $L^*, a^*, b^*$

4

ÉVALUATION DE LA RESTITUTION
DE TEINTES PAR LE FILTRE
FICTIF DE CHAQUE SPECTRE
SÉLECTIONNÉ

5

SELECTION DU SPECTRE
CORRESPONDANT AU
FILTRE AMÉLIORÉ

6

RÉALISATION DU FILTRE
AMÉLIORÉ

7

FIG.1.

FIG.2.

MESURE EN RÉFLEXION
DE CHAQUE ÉCHANTILLON
DE TEINTE — 5a

CALCUL DE X, Y, Z
DE CHAQUE ÉCHANTILLON
OBSERVÉ AVEC LE
FILTRE FICTIF — 5-1

CALCUL DE $X_0, Y_0, Z_0$
DE CHAQUE ÉCHANTILLON
OBSERVÉ SANS FILTRE — 5b

CALCUL DE L'ATTRIBUT
PERCEPTIF H DE CHAQUE
ÉCHANTILLON OBSERVÉ
AVEC LE FILTRE FICTIF — 5-2

CALCUL DE L'ATTRIBUT
PERCEPTIF $H_0$ DE CHAQUE
ÉCHANTILLON OBSERVÉ
SANS FILTRE — 5c

POUR CHAQUE ÉCHANTILLON: — 5-3

CALCUL DE $H - H_0$

POUR LE FILTRE FICTIF: — 5

CALCUL DE $\sum_{ECH.} |H - H_0| / N$ — 5-4

FIG.3.

# FIG. 4a.

# FIG. 4b.

--- FILTRE INITIAL
— FILTRE FICTIF
----- FILTRE AMÉLIORÉ

FIG.5a.

--- FILTRE INITIAL
— FILTRE FICTIF
----- FILTRE AMÉLIORÉ

FIG.5b.

EP 1 890 129 B1

FIG.6b.

FILTRE INITIAL
FILTRE FICTIF
FILTRE AMÉLIORÉ

FIG.6a.

FILTRE INITIAL
FILTRE FICTIF
FILTRE AMÉLIORÉ

**EP 1 890 129 B1**

**Documents brevets cités dans la description**

- EP 1273894 A

- US 5418419 A